# EUROPÄISCHE PATENTSCHRIFT

(11) **EP 3 467 610 B1**
(45) Veröffentlichungstag und Bekanntmachung des Hinweises auf die Patenterteilung: **05.02.2020**
(21) Anmeldenummer: 17195519.8
(22) Anmeldetag: 09.10.2017
(51) Int. Cl.: F24D 19/10, H02M 5/293, H05B 1/02, G05D 23/19, H02M 7/217

(54) **ELEKTRONISCHER ZWEIDRAHT-RAUMTEMPERATURREGLER**
ELECTRONIC TWO WIRE ROOM TEMPERATURE CONTROLLER
THERMOSTAT D'AMBIANCE ÉLECTRONIQUE À DEUX FILS

(43) Veröffentlichungstag der Anmeldung: 10.04.2019
(73) Patentinhaber: Stuhl Regelsysteme GmbH, 91174 Spalt (DE)
(72) Erfinder: Frey, Andreas, 91710 Gunzenhausen (DE); Rossbacher, Gerolf, 91166 Georgensgmünd (DE); Miehling, Georg, 91785 Pleinfeld (DE); Dachs, Oswald, 90542 Eckental (DE)
(74) Vertreter: Patentanwälte ter Smitten Eberlein-Van Hoof Rütten Partnerschaftsgesellschaft mbB

(56) Entgegenhaltungen:
- US-A- 4 635 845
- US-A1- 2017 017 247

## Beschreibung

Die Erfindung betrifft einen elektronischen Zweidraht-Raumtemperaturregler zur Steuerung eines elektrischen Fluid-Stellglieds mit Netz-Wechselspannung.

Ein derartiger Zweidraht-Raumtemperaturregler umfasst zwei Halbleiterschalter zum bedarfsweisen Durchschalten der Netz-Wechselspannung zu dem angeschlossenen Fluid-Stellglied, sowie umfasst eine elektronische Stellgliedsteuerung zur Einstellung einer gewünschten Raumtemperatur durch Steuerung des Fluid-Stellglieds mit Hilfe der Halbleiterschalter. Ferner umfasst der Zweidraht-Raumtemperaturregler einen wiederaufladbaren elektrischen Energiespeicher zur Energieversorgung der Stellgliedsteuerung und eine schaltbare Ladeeinheit zum Aufladen des Energiespeichers.

Elektronische Zweidraht-Raumtemperaturregler weisen zwei Anschlüsse auf, einen Anschluss für die Netz-Wechselspannung, und einen Anschluss für ein elektrisches Stellglied, wie beispielweise ein elektrisches Fluid-Ventil einer Fußbodenheizung. Zweidraht-Raumtemperaturregler haben somit keinen separaten Anschluss für die Energieversorgung ihrer elektronischen Komponenten. Dies ist insbesondere kritisch, wenn die Netz-Wechselspannung an das angeschlossene elektrische Stellglied durchgeschaltet wird, also der Lastschalter geschlossen ist. Elektronische Zweidraht-Raumtemperaturregler haben daher einen Energiespeicher, beispielsweise einen Kondensator, um eine unterbrechungsfreie Energieversorgung der elektronischen Komponenten zu gewährleisten, solange sie an die Netzspannung angeschlossen sind.

Ein derartiger Zweidraht-Raumtemperaturregler ist aus der US 2017/0017247 A1 bekannt. Bei offenem Lastschalter werden die elektronischen Komponenten des Raumtemperaturreglers und der integrierte Energiespeicher über die Netzspannung mit elektrischer Energie versorgt. Hierfür ist zwingend eine Umrichtung der Netzspannung erforderlich, beispielsweise von 230 V auf etwa 3 V.

Bei geschlossenem Lastschalter erfolgt die Energieversorgung der elektronischen Komponenten ausschließlich über die im Energiespeicher gespeicherte Energie. Wenn der Energiespeicher eine definierte Ladeniveauschwelle unterschreitet, wird der Lastschalter kurzzeitig geöffnet um den Energiespeicher wieder zu laden. Es wird also die Energieversorgung des angeschlossenen Stellgliedes kurzzeitig unterbrochen, wodurch es bei dem angeschlossenen Stellglied unter Umständen zu Funktionsstörungen kommen kann.

Es stellt sich daher die Aufgabe, einen elektronischen Zweidraht-Raumtemperaturregler bereitzustellen, der eine unterbrechungsfreie Energieversorgung eines angeschlossenen elektrischen Stellglieds, insbesondere eines elektrischen Fluid-Stellglieds, mit der Netz-Wechselspannung ermöglicht.

Diese Aufgabe wird durch einen elektronischen Zweidraht-Raumtemperaturregler zur Steuerung eines Fluid-Stellglieds mit Netz-Wechselspannung mit den Merkmalen des Hauptanspruchs 1 gelöst.

Der erfindungsgemäße Zweidraht-Raumtemperaturregler umfasst zwei Halbleiterschalter zum bedarfsweisen Durchschalten der Netz-Wechselspannung zu dem Fluid-Stellglied, um dieses mit elektrischer Energie zu versorgen. Durch die Verwendung von zwei gegeneinander verpolt angeordneten Halbleiterschaltern ist es möglich, beide Halbwellen der Wechselspannung, also die positive und die negative Halbwelle, zu schalten.

Der erfindungsgemäße Zweidraht-Raumtemperaturregler umfasst eine elektronische Stellgliedsteuerung. Die Stellgliedsteuerung schaltet die beiden Halbleiterschalter und somit die Energieversorgung des angeschlossenen Fluid-Stellglieds. Basierend auf einem Soll- und einem Ist-Raumtemperaturwert steuert die Stellgliedsteuerung die Energieversorgung des elektrischen Fluid-Stellgliedes, um eine gewünschte Raumtemperatur einzustellen und weitestgehend konstant zu halten.

Der erfindungsgemäße Zweidraht-Raumtemperaturregler umfasst des Weiteren einen wiederaufladbaren elektrischen Energiespeicher zur Energieversorgung der elektronischen Stellgliedsteuerung. Der Energiespeicher ermöglicht es, die Stellgliedsteuerung für eine definierte Zeitspanne unabhängig mit elektrischer Energie zu versorgen.

Der erfindungsgemäße Zweidraht-Raumtemperaturregler umfasst ferner eine schaltbare Ladeeinheit zum quasi-kontinuierlichen Aufladen des Energiespeichers. Bei geschlossenen Halbleiterschaltern, also dann, wenn das angeschlossene Fluid-Stellglied mit elektrischer Energie versorgt wird, stellt sich für einen über den Halbleiterschalter-Steueranschluss jeweils definierten Arbeitspunkt der Halbleiterschalter ein näherungsweise konstanter Spannungsabfall an den Halbleiterschaltern ein. Die Ladeeinheit nutzt diesen quasi-konstanten Spannungsabfall an den Halbleiterschaltern, um den Energiespeicher mit elektrischer Energie zu versorgen. Unter quasi-kontinuierlich ist vorliegend zu verstehen, dass während des größten Teils einer Halbwelle der Netz-Wechselspannung der Spannungsabfall an den Halbleiterschaltern zum Aufladen genutzt werden kann.

Die Energieversorgung des Fluid-Stellglieds wird hierdurch nicht beeinflusst, da die Ladeschaltung nur eine geringe elektrische Energie zum Laden des Energiespeichers benötigt bzw. der Spannungsabfall an den Halbleiterschaltern klein ist gegenüber der Netz-Wechselspannung. Folglich ermöglicht der erfindungsgemäße Zweidraht-Raumtemperaturregler eine unterbrechungsfreie Versorgung des angeschlossenen elektrischen Fluid-Stellglieds mit der Netz-Wechselspannung, wobei der Energiespeicher gleichzeitig aufgeladen werden kann.

Des Weiteren ist keine Spannungsumwandlung zum Laden des Energiespeichers erforderlich, da der Spannungsabfall über den Halbleiterschaltern in der gleichen Größenordnung liegt, wie die Ladespannung des Energiespeichers, beispielweise bei etwa 4 V oder bei etwa 8 V.

Vorzugsweise sind die Halbleiterschalter durch kostengünstige Feldeffekttransistoren gebildet. Feldeffekttransistoren können derart angesteuert werden, dass sich im geschlossenen Zustand der Feldeffekttransistoren ein Spannungsabfall einstellt, der zum Laden des Energiespeichers geeignet ist.

Vorzugsweise schaltet die Ladeeinheit bei geöffneten Halbleiterschaltern die Netz-Wechselspannung während eines vorgegebenen Spannungsintervalls, beispielsweise zwischen -5,6 V und +5,6 V, zu dem Energiespeicher durch, um diesen Aufzuladen. Die Ladeeinheit weist einen Durchlassspannung-Begrenzer auf. Wenn die Eingangsspannung der Ladeeinheit unterhalb eines Durchlassspannungslimits liegt, beispielweise unterhalb von absolut 5,6 V, dann wird die Eingangsspannung an den Ausgang der Batterieladeschaltung durchgeschaltet. Wenn die absolute Eingangsspannung der Ladeeinheit oberhalb des Durchlassspannungslimits liegt, wird der Ausgang der Ladeeinheit elektrisch vom Eingang der Ladeeinheit getrennt. Die Ausgangsspannung der Ladeeinheit, und folglich auch die Ladespannung des Energiespeichers, ist somit immer kleiner/gleich des Durchlassspannungslimits der Ladeeinheit. Dies ermöglicht es, die Netz-Wechselspannung ohne eine separate Spannungsumrichtung zum Laden des Energiespeichers zu verwenden.

In einer bevorzugten Ausführungsform weist die Ladeeinheit eine Z-Diode und einen Halbleiterschalter auf. Die Z-Diode und der Halbleiterschalter sind derart verschaltet, dass der Halbleiterschalter geschlossen ist, solange die Eingangsspannung der Ladeeinheit unterhalb der Durchbruchsspannung der Z-Diode ist. Wenn die Eingangsspannung der Ladeeinheit die Durchbruchsspannung der Z-Diode überschreitet, beginnt die Z-Diode zu leiten, wodurch der Halbleiterschalter geöffnet wird. Die Kombination aus Z-Diode und Halbleiterschalter ermöglicht eine besonders einfache Limitierung der Durchlassspannung der Ladeeinheit und somit eine einfache Einstellung des Spannungsintervalls, welches zum Aufladen des Energiespeicher durchgeschaltet wird.

Vorzugweise ist der Energiespeicher durch einen preisgünstigen Elektrolyt-Kondensator gebildet. Auf teure Superkondensatoren kann verzichtet werden, da die Erfindung bei jedem Betriebszustand ein Aufladen des Energiespeichers ermöglicht.

In einer bevorzugten Ausführungsform weist die Ladeeinheit einen Trennschalter auf, um die elektrische Verbindung zwischen der Ladeeinheit und dem Energiespeicher bedarfsweise zu trennen. Der Trennschalter ermöglicht eine gezielte und bedarfsweise Steuerung des Ladevorgangs des Energiespeichers.

Vorteilhafterweise weist die Stellgliedsteuerung eine Verbindung mit dem Trennschalter der Ladeeinheit auf, um bei einem ausreichenden Ladeniveau des Energiespeichers, also dann wenn sich das Ladeniveau oberhalb eines Ladeniveau-Schwellwerts befindet, das Laden des Energiespeichers zu unterbinden. Der Energiespeicher wird somit nur dann geladen, wenn sein Ladeniveau unterhalb des Ladeniveau-Schwellwerts liegt, also dann wenn ein Laden des Energiespeichers auch erforderlich ist.

In einer vorteilhaften Ausführungsform weist der erfindungsgemäße Zweidraht-Raumtemperaturregler eine separate Hilfsenergieeinheit auf, die den Trennschalter der Ladeeinheit speist und die die für den Schaltvorgang des Trennschalters notwendige elektrische Energie bereitstellt. Die Hilfsenergieeinheit ermöglicht ein Schalten des Trennschalters auch bei kurzzeitiger Unterbrechung der Netz-Wechselspannungsversorgung.

Vorzugsweise ist ein Spannungsregler vorgesehen, der die von dem Energiespeicher bereitgestellte elektrische Spannung auf eine Stellgliedsteuerungs-Speisespannung einstellt. Hierdurch wird die Stellgliedsteuerung, sofern der Energiespeicher einen ausreichenden Ladezustand aufweist, immer mit einer konstanten elektrischen Spannung gespeist.

Vorteilhafterweise ist eine Gleichrichtereinheit vorgesehen, die die Netz-Wechselspannung zum Laden des Energiespeichers gleichrichtet. Die Gleichrichtereinheit erzeugt für beide Halbwellen der Netz-Wechselspannung, also die positive und die negative Halbwelle, eine positive Ausgangsspannung mit einem Spannungsverlauf entsprechend dem Betrag der Netz-Wechselspannung. Dies ermöglicht es, beide Halbwellen der Netz-Wechselspannung zum Laden des Energiespeichers zu verwenden.

Vorzugsweise ist ein Temperatursensor zur einfachen Detektion der Raumtemperatur vorgesehen. Für die Regulierung der Raumtemperatur ist somit kein externer Temperatursensor erforderlich.

Ein vorteilhaftes Ausführungsbeispiel des erfindungsgemäßen Zweidraht-Raumtemperaturreglers wird im Folgenden anhand der beigefügten Figuren beschrieben, wobei
Figur 1 einen schematischen Schaltplan des Zweidraht-Raumtemperaturreglers zeigt,
Figur 2 einen Schaltplan der Ladeeinheit des Zweidraht-Raumtemperaturreglers zeigt, und
Figur 3 eine schematische Darstellung der zeitlichen Verläufe der eingespeisten Netz-Wechselspannung sowie der Eingangs- und Ausgangsspannung der Ladeeinheit für geschlossene Halbleiterschalter (a) und für offene Halbleiterschalter (b) zeigt.

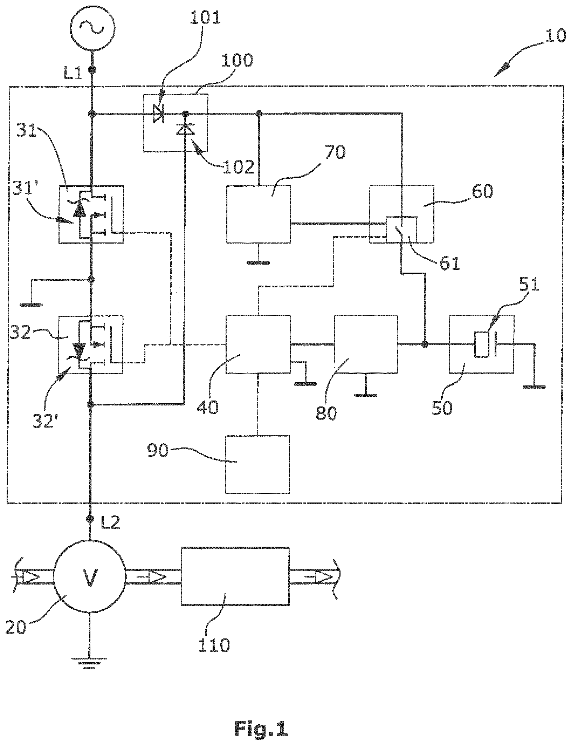

Figur 1 zeigt einen elektronischen Zweidraht-Raumtemperaturregler 10 zur Steuerung eines elektrischen Fluid-Ventils 20 einer Fußbodenheizung 110.

Der Zweidraht-Raumtemperaturregler 10 umfasst zwei Halbleiterschalter 31,32 ausgebildet durch zwei Feldeffekttransistoren 31',32', eine Stellgliedsteuerung 40, einen Energiespeicher 50 mit einem Elektrolyt-Kondensator 51, eine Ladeeinheit 60 mit einem Trennschalter 61, eine Hilfsenergieeinheit 70, einen Spannungsregler 80, einen Temperatursensor 90 und eine Gleichrichtereinheit 100 mit zwei Dioden 101,102.

Die Halbleiterschalter 31,32 sind zueinander verpolt angeordnet, es sind also die Source-Anschlüsse der beiden Feldeffekttransistoren 31',32' direkt miteinander verbunden. Dies ermöglicht es, beide Halbwellen der Netz-Wechselspannung an das Fluid-Ventil 20 zu schalten. Der Eingang des ersten Halbleiterschalters 31 ist elektrisch mit dem Netz-Wechselspannungseingang L1 des Zweidraht-Raumtemperaturreglers 10 verbunden und der Ausgang des zweiten Halbleiterschalters 32 ist elektrisch mit dem Stellgliedausgang L2 verbunden. Die Steueranschlüsse der Halbleiterschalter 31,32, also die Gate-Anschlüsse der Feldeffekttransistoren 31',32', sind mit der Stellgliedsteuerung 40 verbunden. Bei geschlossen, also leitenden, Halbleiterschaltern 31,32 ergibt sich ein annähernd konstanter Spannungsabfall von etwa 4 V. Alternativ können die Halbleiterschalter 31,32 auch für einen anderen Spannungsabfall, beispielsweise für einen Spannungsabfall von 8 V, ausgelegt werden.

Die Gleichrichtereinheit 100 ist eingangsseitig elektrisch mit dem Netz-Wechselspannungseingang L1 und mit dem Stellgliedausgang L2 verbunden und ausgangsseitig elektrisch mit der Hilfsenergieeinheit 70 und der Ladeeinheit 60 verbunden.

Die Gleichrichtereinheit 100 umfasst zwei Dioden 101,102. Die erste Diode 101 ist mit ihrer Anode an dem Eingangsanschluss zu dem Netz-Wechselspannungseingang L1 angeschlossen und die zweite Diode 102 ist mit ihrer Anode an dem Eingangsanschluss zu dem Stellgliedausgang L2 angeschlossen. Durch diese Anordnung werden die Hilfsenergieeinheit 70 und die Ladeeinheit 60 immer mit einer positiven Spannung gespeist, wobei das Spannungsniveau dem Betrag des aktuellen Spannungsniveaus der Netz-Wechselspannung entspricht.

Die Hilfsenergieeinheit 70 ist elektrisch mit der Gleichrichtereinheit 100, dem Ladeeinheit-Trennschalter 61 und einem internen Masseanschluss, der die Spannung zwischen den Halbleiterschaltern 31,32 abgreift, verbunden. Die Hilfsenergieeinheit 70 stellt die nötige elektrische Energie zum Schalten des Trennschalters 61 bereit.

Die Stellgliedsteuerung 40 ist elektrisch mit dem Spannungsregler 80 und dem internen Masseanschluss verbunden. Die Stellgliedsteuerung 40 ist des Weiteren mit den Steueranschlüssen der Halbleiterschalter 31,32 und mit dem Steueranschluss des Trennschalters 61 der Ladeeinheit 60 verbunden.

Die Stellgliedsteuerung 40 empfängt ein Temperatursignal von dem Temperatursensor 90 und steuert über die Halbleiterschalter 31,32 und das Fluid-Ventil 20 den Fluid-Fluss in der Fußbodenheizung 110, um eine gewünschte Raumtemperatur einzustellen.

Des Weiteren steuert die Stellgliedsteuerung 40 den Trennschalter 61 der Ladeeinheit 60, um einerseits einen ausreichenden Ladezustand des Energiespeichers 50 zu gewährleisten und andererseits ein unnötiges Laden des Energiespeichers 50 zu verhindern.

Der Spannungsregler 80 ist elektrisch mit der Stellgliedsteuerung 40, dem Energiespeicher 50, der Ladeeinheit 60 und dem internen Masseanschluss verbunden. Der Spannungsregler 80 wird elektrisch durch die Ladeeinheit 60 und den Energiespeicher 50 gespeist und erzeugt eine konstante Versorgungsspannung von beispielsweise etwa 3,3 V für die Stellgliedsteuerung 40.

Der Energiespeicher 50 ist elektrisch mit der Ladeeinheit 60, dem Spannungsregler 80 und dem internen Masseanschluss verbunden. Der Energiespeicher 50 umfasst einen Elektrolyt-Kondensator 51 zur Speicherung von elektrischer Energie.

Der Energiespeicher 50 wird bei Bedarf durch die Ladeeinheit 60 aufgeladen und versorgt mit Hilfe des Spannungsreglers 80 die Stellgliedsteuerung 40 mit elektrischer Energie. Die im Energiespeicher 50 gespeicherte elektrische Energie ermöglicht es, die Stellgliedsteuerung 40 kurzeitig unabhängig von der Netz-Wechselspannungsversorgung mit elektrischer Energie zu versorgen, beispielweise für ca. 30 Sekunden.

Die Ladeeinheit 60 ist eingangsseitig elektrisch mit der Gleichrichtereinheit 100 verbunden und ausgangsseitig elektrisch mit dem Energiespeicher 50 und dem Spannungsregler 80 verbunden. Der Trennschalter 61 der Ladeeinheit 60 wird elektrisch von der Hilfsenergieeinheit 70 gespeist, und wird durch die Stellgliedsteuerung 40 gesteuert.

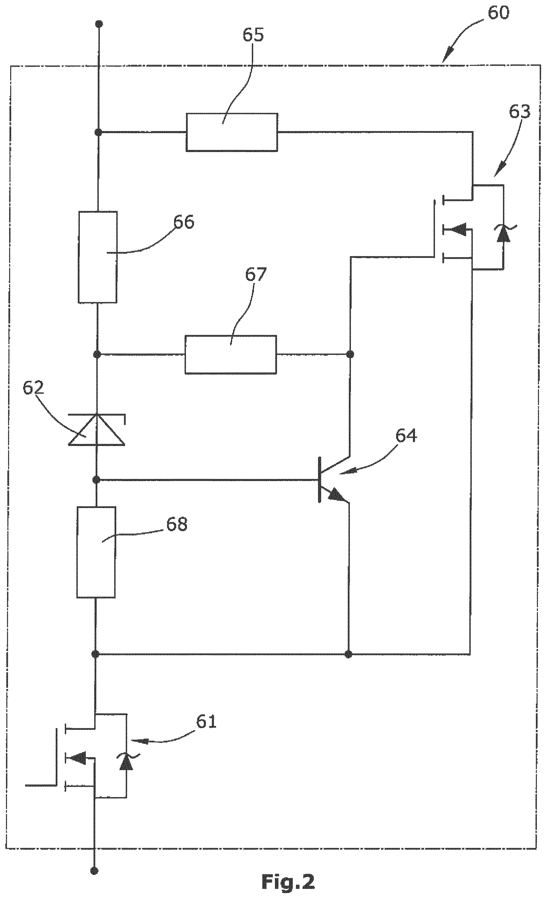

Figur 2 zeigt einen Schaltplan der Ladeeinheit 60. Die Ladeeinheit 60 umfasst neben dem Trennschalter-Feldeffekttransistor 61, eine Z-Diode 62, einen weiteren Feldeffekttransistor 63, einen Bipolartransistor 64 und mehrere elektrische Widerstände 65,66,67,68.

Der Trennschalter-Feldeffekttransistor 61 ist unmittelbar am Ausgang der Ladeeinheit angeordnet und ermöglicht somit eine elektrische Trennung der Ladeeinheit 60 von dem Energiespeicher 50 und von dem Spannungsregler 80. Der Trennschalter-Feldeffekttransistor 61 wird über den Steueranschluss (Gate-Anschluss) von der Stellgliedsteuerung angesteuert, um bei ausreichendem Ladeniveau des Energiespeichers 50 ein weiteres Laden zu unterbinden. Umgekehrt wird bei Unterschreiten eines Ladeniveau-Schwellwerts des Energiespeichers 50 der Trennschalter 61 geschlossen, um den Energiespeicher wieder aufzuladen.

Die Schaltung, bestehend aus der Z-Diode 62, dem Feldeffekttransistor 63, dem Bipolartransistor 64 und den elektrischen Widerständen 65,66,67,68, stellt einen Durchlassspannungs-Begrenzer dar, wobei das Durchlassspannungslimit durch die Durchbruchsspannung U2 der Z-Diode 62, beispielsweise etwa 5,6 V, bestimmt wird.

Liegt die Eingangsspannung der Ladeeinheit 60 unterhalb der Durchbruchsspannung U2, dann ist der Feldeffekttransistor 63 leitend (eingeschaltet) und die Eingangsspannung wird zu dem Trennschalter-Feldeffekttransistor 61 durchgeschaltet. Wenn die Eingangsspannung die Durchbruchsspannung U2 überschreitet, beginnt die Z-Diode 62, zu leiten. Hierdurch wird der Feldeffekttransistor 63 nicht-leitend (ausgeschaltet) und trennt somit den Trennschalter-Feldeffekttransistor 61 elektrisch von dem Eingangsanschluss der Ladeeinheit 60.

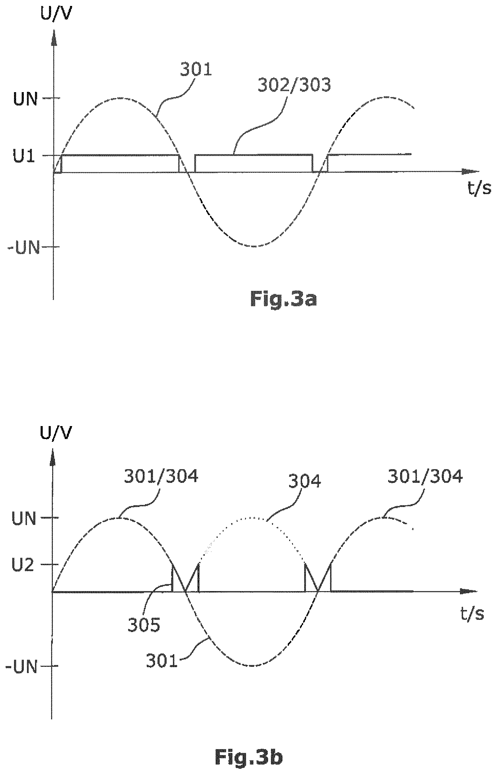

In Abhängigkeit von den Schaltzuständen der Halbleiterschalter 31,32 ergeben sich unterschiedliche Verläufe 302,304 der Eingangsspannung der Ladeeinheit 60. Die unterschiedlichen Verläufe 302,304 der Eingangsspannung, sowie die resultierenden Ausgangsspannungsverläufe 303,305 der Ladeeinheit 60 bei geschlossenem Trennschalter 61, sind in Figur 3 zusammen mit dem Spannungsverlauf der Netz-Wechselspannung 301 dargestellt.

Bei leitenden (geschlossenen) Halbleiterschaltern 31,32 ergibt sich auf Grund des Spannungsabfalls an den Halbleiterschaltern 31,32 sowie der Gleichrichtung in der Gleichrichtereinheit 100 ein quasi-konstanter Eingangsspannungsverlauf 302 an der Ladeeinheit 60 mit einem Spannungsniveau von etwa U1 = 4 V. Da die Eingangsspannung somit immer unterhalb der Durchbruchsspannung U2 von etwa 5,6 V liegt, wird die Eingangsspannung kontinuierlich durchgeschaltet. Der Verlauf 303 der Ausgangsspannung der Ladeeinheit 60 ist somit näherungsweise gleich dem Verlauf 302 der Eingangsspannung. Alternativ können, bei entsprechender Adaption der Ladeeinheit 60, die Halbleiterschalter 31,32 auch für ein anderes Ladeeinheit-Eingangsspannungsniveau U1', beispielsweise U1' = 8 V, ausgelegt werden.

Bei leitenden Halbleiterschaltern 31,32 wird der Energiespeicher 50 somit quasi-kontinuierlich mit einer konstanten Spannung von U1 = 4 V geladen, solange der Trennschalter 61 geschlossen ist.

Bei nicht-leitenden (offenen) Halbleiterschaltern 31,32 ergibt sich an der Ladeeinheit 60 auf Grund der Gleichrichtereinheit 100 ein Eingangsspannungsverlauf 304, welcher näherungsweise dem Betrag des Netz-Wechselspannungsverlaufs 301 entspricht. Die Eingangsspannung bewegt sich somit in einem Spannungsintervall von 0 V bis UN, wobei UN beispielsweise gleich 230 V ist, und überschreitet folglich die Durchbruchsspannung U2. Sobald die Eingangsspannung die Durchbruchsspannung U2 überschreitet, wird der Ausgang der Ladeeinheit 60 elektrisch vom Eingang der Ladeeinheit getrennt, wodurch die Ausgangsspannung auf näherungsweise 0 V abfällt.

Bei nicht-leitenden Halbleiterschaltern 31,32 wird der Energiespeicher 50 folglich diskontinuierlich mit einer Spannung zwischen 0 V und U2 = 5,6 V entsprechend dem Ausgangsspannungsverlauf 305 der Ladeeinheit 50 gespeist.

## Patentansprüche

1. Elektronischer Zweidraht-Raumtemperaturregler (10) zur Steuerung eines elektrischen Fluid-Stellglieds (20) mit Netz-Wechselspannung, **gekennzeichnet durch**, zwei Halbleiterschalter (31,32) zum bedarfsweisen Durchschalten der Netz-Wechselspannung zu dem Fluid-Stellglied (20),
einer elektronischen Stellgliedsteuerung (40) zur Einstellung einer gewünschten Raumtemperatur durch Steuerung des Fluid-Stellglieds (20) mit Hilfe der Halbleiterschalter (31,32),
einen wiederaufladbaren elektrischen Energiespeicher (50) zur Energieversorgung der Stellgliedsteuerung (40), und
eine schaltbare Ladeeinheit (60) zum Aufladen des Energiespeichers (50),
wobei die Ladeeinheit (60) so eingerichtet ist, dass sie den Energiespeicher (50) bei geschlossenen Halbleiterschaltern (31,32) quasi-kontinuierlich über den Spannungsabfall an den Halbleiterschaltern (31,32) auflädt.

2. Elektronischer Zweidraht-Raumtemperaturregler (10) nach Anspruch 1 wobei die Ladeeinheit (60) so eingerichtet ist, dass sie den Energiespeicher (50) bei geöffneten Halbleiterschaltern (31,32) auflädt, indem die Netz-Wechselspannung während eines vorgegeben Spannungsintervalls um den Nulldurchgang kurzeitig zu dem Energiespeicher (50) durchgeschaltet wird.

3. Elektronischer Zweidraht-Raumtemperaturregler (10) nach Anspruch 1 oder 2, wobei der Energiespeicher (50) von einem Kondensator (51) gebildet ist, vorzugsweise von einem Elektrolyt-Kondensator (51).

4. Elektronischer Zweidraht-Raumtemperaturregler (10) nach einem der vorigen Ansprüche, wobei Ladeeinheit (60) einen Trennschalter (61) zur bedarfsweisen Trennung der elektrischen Verbindung zwischen der Ladeeinheit (60) und dem Energiespeicher (50) aufweist.

5. Elektronischer Zweidraht-Raumtemperaturregler (10) nach Anspruch 4, wobei die Stellgliedsteuerung (40) mit dem Trennschalter (61) verbunden ist, um die Ladeeinheit (60) bei einem Ladeniveau des Energiespeichers (50) oberhalb eines Ladeniveau-Schwellwerts elektrisch von dem Energiespeicher (50) zu trennen.

6. Elektronischer Zweidraht-Raumtemperaturregler (10) nach Anspruch 4 oder 5, mit einer zusätzlichen separaten Hilfsenergieeinheit (70), zur Speisung des Trennschalters (61) und zur Bereitstellung der für den Schaltvorgang des Trennschalters (61) notwendigen elektrischen Energie.

7. Elektronischer Zweidraht-Raumtemperaturregler (10) nach einem der vorigen Ansprüche, mit einem zusätzlichen Spannungsregler (80), zur Einstellung der von dem Energiespeicher (50) bereitgestellten Spannung auf eine Stellgliedsteuerungs-Speisespannung.

8. Elektronischer Zweidraht-Raumtemperaturregler (10) nach einem der vorigen Ansprüche, wobei eine Gleichrichtereinheit (100) vorgesehen ist, die die Netz-Wechselspannung zum Laden des Energiespeichers (50) gleichrichtet.

9. Elektronischer Zweidraht-Raumtemperaturregler (10) nach einem der vorigen Ansprüche, wobei die Ladeeinheit (60) eine Z-Diode (62) und einen Halbleiterschalter (63) aufweist.

10. Elektronischer Zweidraht-Raumtemperaturregler (10) nach einem der vorigen Ansprüche, wobei die Halbleiterschalter (31,32) Feldeffekttransistoren (31',32') sind.

11. Elektronischer Zweidraht-Raumtemperaturregler (10) nach einem der vorigen Ansprüche, wobei der Zweidraht-Raumtemperaturregler (10) zusätzlich einen Temperatursensor (90) zur Detektierung der Raumtemperatur aufweist.

## Claims

1. Electronic two-wire room temperature controller (10) for controlling an electrical fluid actuator (20) with AC mains voltage, **characterized by** two semiconductor switches (31, 32) for interconnecting the mains AC voltage to the fluid actuator (20) as needed, an electronic actuator control (40) for setting a desired room temperature by controlling the fluid actuator (20) using the semiconductor switches (31, 32), a rechargeable electric energy storage (50) for powering the actuator control (40), and a switchable charging unit (60) for charging the energy storage (50), wherein the charging unit (60) is configured such that it charges the energy storage (50) quasi-continuously via the voltage drop across the semiconductor switches (31, 32), with the semiconductor switches (31, 32) being closed.

2. Electronic two-wire room temperature controller (10) of claim 1, wherein the charging unit (60) is configured such that it charges the energy storage (50) with the semiconductor switches (31, 32) open, by temporarily interconnecting the mains AC voltage to the energy storage (50) for a predetermined voltage interval around the zero crossing.

3. Electronic two-wire room temperature controller (10) of claim 1 or 2, wherein the energy storage (50) is provided by a capacitor (51), preferably by an electrolytic capacitor (51).

4. Electronic two-wire room temperature controller (10) of one of the preceding claims, wherein the charging unit (60) is provided with a disconnector switch (61) for disconnecting the electrical connection between the charging unit (60) and the energy storage (50) as needed.

5. Electronic two-wire room temperature controller (10) of claim 4, wherein the actuator control (40) is connected to the disconnector switch (61) for electrically disconnecting the charging unit (60) from the energy storage (50) at a charge level of the energy storage (50) exceeding a charge level threshold.

6. Electronic two-wire room temperature controller (10) of claim 4 or 5, comprising an additional separate auxiliary power unit (70) for feeding the disconnector switch (61) and for providing the electrical energy required for the switching the disconnector switch (61).

7. Electronic two-wire room temperature controller (10) of one of the preceding claims, comprising an additional voltage regulator (80) for adjusting the voltage provided by the energy storage (50) to an actuator control supply voltage.

8. Electronic two-wire room temperature controller (10) of one of the preceding claims, wherein a rectifier unit (100) is provided that rectifies the mains AC voltage for charging the energy storage (50).

9. Electronic two-wire room temperature controller (10) of one of the preceding claims, wherein the charging unit (60) comprises a Z-diode (62) and a semiconductor switch (63).

10. Electronic two-wire room temperature controller (10) of one of the preceding claims, wherein the semiconductor switches (31, 32) are field-effect transistors (31', 32').

11. Electronic two-wire room temperature controller (10) of one of the preceding claims, wherein the two-wire room temperature controller (10) comprises a temperature sensor (90) for detecting the room temperature.

## Revendications

1. Régulateur électronique de température ambiante à deux fils (10) pour la commande d'un actionneur de fluide électrique (20) par tension alternative de réseau, **caractérisé par** deux commutateurs à semi-conducteur (31, 32) pour commuter, selon les besoins, la tension alternative de réseau vers l'actionneur de fluide (20), une commande d'actionneur électronique (40) pour régler une température ambiante désirée en commandant l'actionneur à fluide (20) à l'aide des commutateurs à semi-conducteur (31, 32), un accumulateur d'énergie électrique rechargeable (50) pour alimenter la commande d'actionneur (40), et une unité de chargement commutable (60) pour charger la accumulateur d'énergie (50), l'unité de chargement (60) étant configurée pour charger, avec les commutateurs à semi-conducteurs en état fermé (31, 32), l'accumulateur d'énergie (50) de manière quasi continue via la chute de tension aux commutateurs à semi-conducteurs (31, 32).

2. Régulateur électronique de température ambiante à deux fils (10) selon la revendication 1, dans lequel l'unité de chargement (60) charge est configurée pour charger l'accumulateur d'énergie (50), avec les commutateurs à semi-conducteurs (31, 32) en état ouvert, du fait que la tension alternative du réseau est brièvement fournie à l'accumulateur d'énergie (50) pendant un intervalle de tension prédéterminé autour du passage par zéro.

3. Régulateur électronique de température ambiante à deux fils (10) selon la revendication 1 ou 2, dans lequel l'accumulateur d'énergie (50) est formé par un condensateur (51), de préférence un condensateur électrolytique (51).

4. Régulateur électronique de température ambiante à deux fils (10) selon l'une quelconque des revendications précédentes, dans lequel l'unité de chargement (60) comprend un coupe-circuit (61) pour couper, selon les besoins, la connexion électrique entre l'unité de chargement (60) et l'accumulateur d'énergie (50).

5. Régulateur électronique de température ambiante à deux fils (10) selon la revendication 4, dans lequel le contrôleur d'actionneur (40) est relié au coupe-circuit (61) pour couper électriquement l'unité de chargement (60) de l'accumulateur d'énergie (50) lors d'un niveau de charge de l'accumulateur d'énergie (50) supérieur à un seuil de niveau de charge.

6. Régulateur électronique de température ambiante à deux fils (10) selon la revendication 4 ou 5, avec une unité d'alimentation auxiliaire (70) séparé supplémentaire pour l'alimentation du coupe-circuit (61) et pour fournir l'énergie électrique nécessaire à la commutation du coupe-circuit (61).

7. Régulateur électronique de température ambiante à deux fils (10) selon l'une quelconque des revendications précédentes, avec un régulateur de tension (80) supplémentaire pour ajuster la tension fournie par l'accumulateur d'énergie (50) à une tension d'alimentation de commande d'actionneur.

8. Régulateur électronique de température ambiante à deux fils (10) selon l'une quelconque des revendications précédentes, dans lequel une unité de redressement (100) est prévue, redressant la tension alternative du réseau pour de charger l'accumulateur d'énergie (50).

9. Régulateur électronique de température ambiante à deux fils (10) selon l'une quelconque des revendications précédentes, dans lequel l'unité de chargement (60) comprend une diode Zener (62) et un commutateur à semi-conducteur (63).

10. Régulateur électronique de température ambiante à deux fils (10) selon l'une quelconque des revendications précédentes, dans lequel les commutateurs à semi-conducteur (31, 32) sont des transistors à effet de champ (31', 32').

11. Régulateur électronique de température ambiante à deux fils (10) selon l'une des revendications précédentes, dans lequel le régulateur de température ambiante à deux fils (10) comprend en outre un capteur de température (90) détectant la température ambiante.
